# EUROPEAN PATENT APPLICATION

(11) **EP 2 034 792 A1**
(43) Date of publication of application: **11.03.2009**
(21) Application number: 07015716.9
(22) Date of filing: 09.08.2007
(51) Int. Cl.: H04W 72/04

(54) **Method and device for data processing and communication system comprising such device**

(71) Applicant: Nokia Corporation, 02150 Espoo (FI)
(72) Inventor: The designation of the inventor has not yet been filed
(74) Representative: Bruglachner, Thomas E.

(57) **Abstract**

A method and a device for data processing in particular in a network is provided comprising the step of: Subsequent to a random access procedure, a shared control channel is utilized to assign resources to a User Equipment for initiating a transmission via an enhanced dedicated channel.

## Description

The invention relates to a method and to a device for data processing and communication system comprising such a device.

For details on a Random Access Procedure as well as on an Acquisition Indicator Channel (AICH) reference is made to [1].

A High Speed Random Access Channel (HS-RACH) uses the random access procedure according to 3GPP, Release 99, i.e. handshaking between a User Equipment UE and a Node B, to establish an uplink connection for the UE. In Release 99, an acknowledgement for the UE in downlink direction is conveyed via the Acquisition Indicator Channel (AICH).

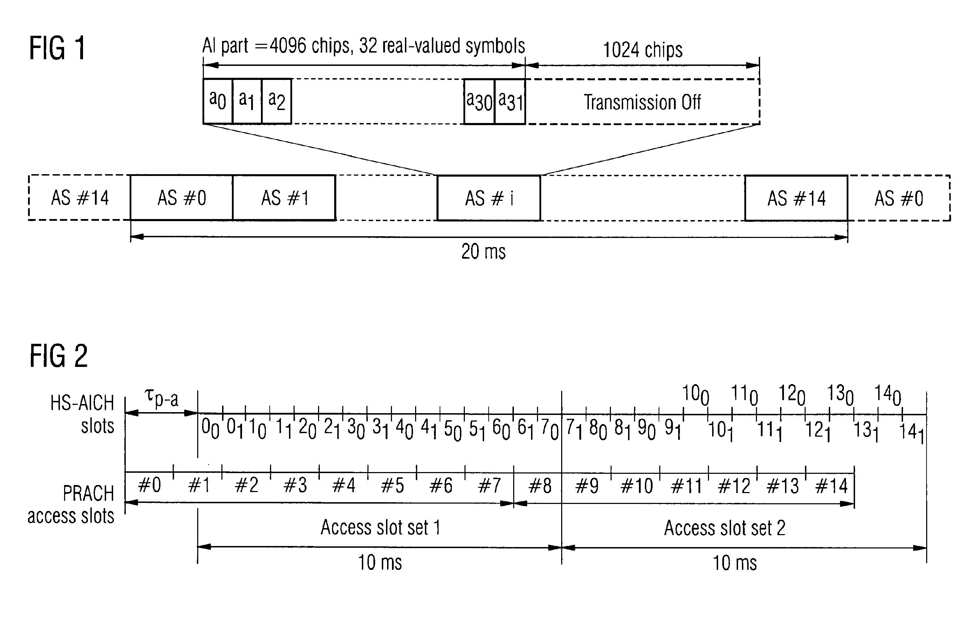

**Fig.1** illustrates the structure of the AICH. The AICH comprises a repeated sequence of 15 consecutive access slots (AS), each of a 5120 chips length. Each AS comprises two parts, an Acquisition Indicator (AI) part comprising 32 real-valued symbols a₀, ..., a₃₁ and a part of 1024 chips duration with no transmission that is not formally considered a portion of the AICH.

As described in, e.g., [2], a High Speed Shared Control Channel (HS-SCCH) carries key information necessary for High Speed Downlink Shared Channel (HS-DSCH) demodulation. In High Speed Downlink Packet Access (HSDPA) data transmission, HS-SCCH is used to signal the information to a recipient for which the associated data transmission is intended together with information about reception parameters of the data part.

HS-SCCH has a duration of three slots that is divided into two functional parts. The first slot (first part) carries time-critical information that is needed to start the demodulation process in due time to avoid chip level buffering. The next two slots (second part) contain less time-critical parameters including Cyclic Redundancy Check (CRC) to check the validity of the HS-SCCH information and Hybrid Automatic Repeat Request (HARQ) process information. For protection purposes, both HS-SCCH parts employ terminal-specific masking to allow the terminal to decide whether the detected control channel is actually intended for the particular terminal (see also [2]).

The HS-SCCH uses a. Spreading Factor (SF) 128 that can accommodate 40 bits per slot (after channel encoding). The HS-SCCH uses half rate convolution coding with both parts encoded separately from each other because the time-critical information is required to be available immediately after the first slot and thus cannot be interleaved together with Part 2 (see also [2]).

The **problem** to be solved is to enable a fast and efficient assigning of resources to the UE in order to start Enhanced Uplink Dedicated Channel (E-DCH) transmission.

This problem is solved according to the features of the independent claims. Further embodiments result from the depending claims.

In order to overcome this problem, a method for data processing in particular in a network is provided comprising the step: Subsequent to a random access procedure, a shared control channel is utilized to assign resources to a User Equipment for initiating a transmission via an enhanced dedicated channel.

This approach allows fast and efficiently assigning resources to the UE in order to start Enhanced Uplink Dedicated Channel (E-DCH) transmission from scratch without high collision probability, false alarm and miss detection.

In an embodiment, an HS-AICH is determined to signal enhanced dedicated channel transmission parameters for in particular two User Equipments in one access slot of the HS-AICH.

In another embodiment, the HS-AICH provides resources to a user equipment for initiating a transmission via an enhanced dedicated channel in case of a confirmation message (ACK) has been provided by the AICH.

By providing a negative acknowledgement NACK by the AICH the User Equipment knows that there is not yet any E-DCH information available for this particular User Equipment. Upon receiving such NACK message, the User Equipment does not have to increase power to reach the Node B.

In a further embodiment, the HS-AICH comprises a timing offset in relation to an AICH access slot timing.

In a next embodiment, a reception of an acquisition indicator on an AICH access slot is associated with at least one event. Preferably, two sets of H-RNTIs may be associated with a RACH signature sequence. Further, an H-RNTI may be associated with the at least one event.

Such approach advantageously allows to assign the resources to the User Equipment for initiating transmission via the E-DCH without having to alter existing Layer 1 mechanisms.

It is also an embodiment that the shared control channel is capable of carrying resources for more than one enhanced dedicated channel.

Hence, a higher E-DCH resource allocation capacity is provided.

Pursuant to another embodiment, the shared control channel is an HS-SCCH.

The problem stated supra is also solved by a device for data processing comprising a processor unit that is equipped and/or arranged such that the method as described is executable on said processor unit.

According to an embodiment, said device is a communication device, in particular a network element. In particular, said device may be a Node B or a User Equipment.

The problem stated above is also solved by a Communication system comprising the device as described herein.

Embodiments of the invention are shown and illustrated in the following figures:
- Fig.2: shows a diagram visualizing PRACH access slots and downlink HS-AICH slots associated thereto;
- Fig.3: shows a diagram visualizing PRACH access slots, AICH access slots and an HS-AICH timing relation associated;
- Fig.4: shows a H-RNTI association to a PRACH signature sequence and to Events S₁ and S₂;
- Fig.5: shows a timing relationship between AICH access slots and HS-SCCH sub-frames;
- Fig.6: shows a diagram depicting an association of H-RNTIs with Sequence-Event combinations and with E-DCH resource allocation via HS-SCCH;
- Fig.7: shows an example with four PRACH signature sequences per cell;
- Fig.8: shows a diagram depicting as how two HS-RACH UEs can be supported at the same time.

The approach provided herewith suggests using an HS-SCCH or a modified HS-SCCH to assign resources to a UE to start an E-DCH transmission preferably subsequent to or at the end of a random access procedure.

This may be scheduled either directly after successful reception of a Physical Random Access Channel (PRACH) preamble, with no further use of the AICH or it may be scheduled shortly after the AICH has been received in order to minimize the resource allocation delay.

Hereinafter, in particular three proposals are suggested:
(1) Proposal 1 uses a modified HS-SCCH (that may also be referred to as "HS-AICH") of the AICH for resource allocation.
(2) Proposal 2 introduces a modified HS-SCCH (that may also be referred to as "HS-AICH") and describes a mechanism to link an ACK on the AICH with the HS-AICH receptions.
   Further, a timing relationship between the HS-AICH and the AICH is provided.
(3) Proposal 3 utilizes an existing HS-SCCH and its frame structure and proposes mechanisms to link an ACK on the AICH with the HS-SCCH reception.

### Proposal 1: HS-SCCH part I type solution to replace AICH

The HS-SCCH could be used as an AICH-type downlink acquisition channel that can also convey additional data than just ACK or NACK in conventional AICH. Such a channel is referred to herein as HS-AICH.

In order to be compatible with a RACH procedure, a signature selected by the UE for a PRACH to be detected by Node B could be used to mask associated HS-SCCH part I as is done in HSDPA operation with HS-DSCH Radio Network Transaction Identifier (H-RNTI).

Thus, the detection of HS-AICH is as with HS-SCCH part I. An orthogonal sequence of {-1, 1} may be changed into {0, 1} form. The possibilities are in particular as follows:
- The HS-AICH may have a length of one slot with an actual spreading factor (SF) of 128; or
- the HS-AICH may have a length of two slots if the SF is increased to 256. Such an increase of the SF would improve the performance in case of a bad condition, but on the other hand would cause delay of one additional slot;
- the SF may be increased to 256, but then only utilizes a reduced number of information bits (20 bits) to correspond to a one slot length of the HS-AICH.
A timing diagram for this approach is shown in **Fig.2****.** For each PRACH, associated HS-AICH slots are defined. With each HS-AICH slot the upper case number defines to which PRACH access slot (AS) the HS-AICH slot is set and the subscript number in each HS-AICH slot numbers the slot within an AS.

The timing of the HS-AICH is the same as the timing with the AICH. Fig.2 shows one example where two HS-AICH slots are defined for each random access AS. Thus, with this example it is possible to signal E-DCH transmission parameters for two UEs in one AS.

### Proposal 2: AICH extended with HS-SCCH part I type solution

In order to obtain a robust mechanism, the conventional AICH could be replaced with a combined AICH HS-SCCH part I type solution, herein referred to as HS-AICH.

In such scenario, the AICH may provide positive or negative acknowledgement information for the UE. However, if the UE is acknowledged, the UE knows that there will be an HS-AICH information destined to this UE providing the UE with information for an E-DCH transmission to be processed.

The HS-AICH by sending NACK may notify the UE that there is no E-DCH information for this particular UE. Hence, the UE becomes aware of the fact that the Node B was able to detected its signal and the UE may try again (to obtain an ACK with information needed to set up the E-DCH transmission) with the same power level. This means, the UE would not have to increase its transmit power in order to reach the Node B, which would be futile and a waste of energy as the Node B already received the UE's signal.

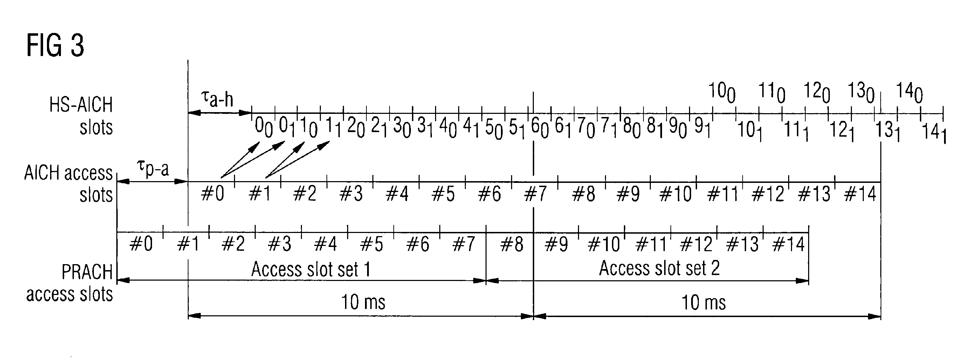

A timing diagram for this proposal is shown in **Fig.3****.** For each PRACH and for each associated AICH access slot, associated HS-AICH slots are defined. The timing of the HS-AICH relates to the AICH access slot timing with a timing offset amounting to τₐ₋ₕ. The timing offset shall be larger than 5120 chips, hence the UE has time to detect AICH before it starts listening to HS-AICH if it received an ACK on the AICH.

### Proposal 3: AICH extended with HS-SCCH reception

With this proposal, a relationship between the AICH and the HS-SCCH is defined.

If a UE receives an ACK on the AICH in an given Access Slot i (AS#i), an HS-SCCH sub-frame is set up, where E-DCH resource information on a HS-SCCH is sent to the UE. This mechanism may comprise the following aspects:
(1) A timing relationship between the AICH and the HS-SCCH has to be determined.
(2) A linkage between the used PRACH signature sequence, the AICH AS where the Ai(ACK) was received and an H-RNTI id for HS-SCCH decoding.

### Proposal 3a:

This proposal can be organized as follows:
1. Event definition:
   Let N be the SFN of the 10 ms frame, within which the beginning of the AS is located where the AI has been received.
   The reception of an AI on AICH AS shall be defined to be associated with an Event S1, if
      ((N mod 4 = 0 or N mod 4 = 1) and
      AS number is odd) or
      ((N mod 4 ₌ 2 or N mod 4 ₌ 3) and
      AS number is even).
   The reception of an AI on AICH AS shall be defined to be associated with an Event S2, if
   ((N mod 4 = 0 or N mod 4 = 1) and
   AS number is even) or
   ((N mod 4 = 2 or N mod 4 = 3) and
   AS number is odd).
2. Two sets of H-RNTIs are associated with a RACH signature sequence:
   Each RACH signature sequence (used for HS-RACH) is associated with two different H-RNTI values. One H-RNTI will be used at the Event S1 and the other at the Event S2. All H-RNTI values associated with RACH signature sequences are mutually different.

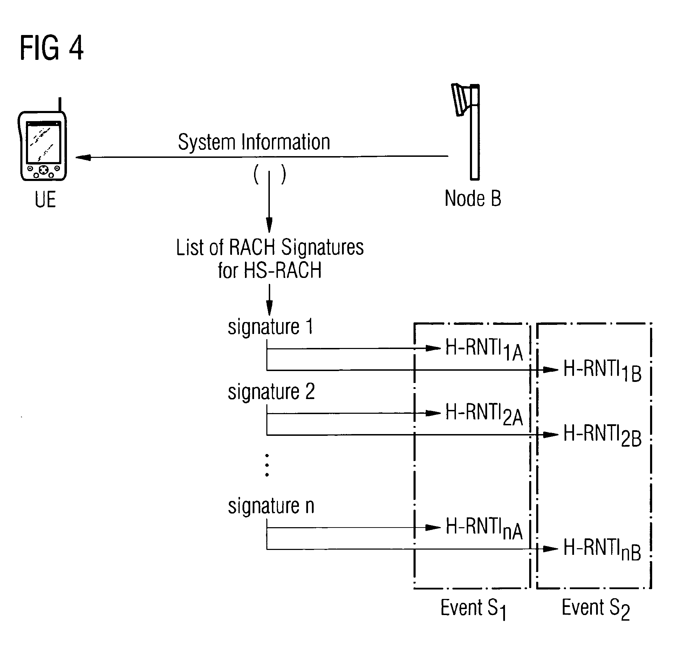

   **Fig.4** shows an example, according to which a signature to the H-RNTI association is broadcasted in the cell.
3. H-RNTI and HS-SCCH selection:
   If a UE receives an AI(ACK) with the RACH signature sequence sᵢ in an AICH AS associated with the Event Sᵢ, then the UE selects the H-RNTI associated with (sᵢ,Sᵢ) and monitors the HS-SCCH with this H-RNTI at the start of the next HS-SCCH sub-frame for the duration of one HS-SCCH sub-frame period. The UE therefore waits either 1 or 2 TSs till the start of the next HS-SCCH sub-frame.

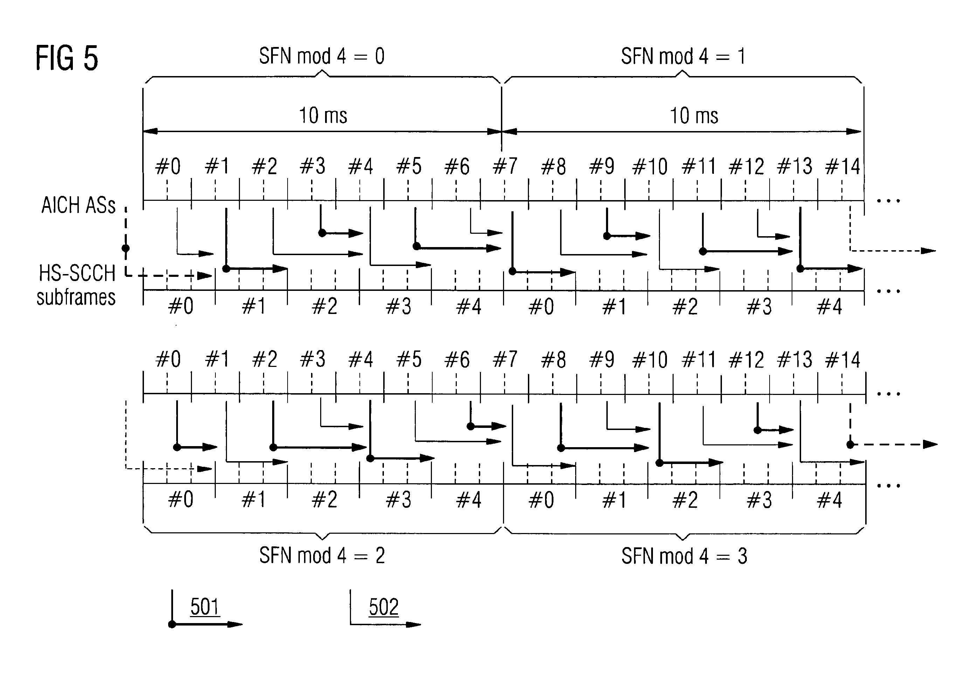

   In **Fig.5** visualizes a timing relationship between AICH AS and HS-SCCH sub-frames. Two types or arrows 501 and 502 are shown, type 501 references the AS that are associated with the Event S2 and the type 502 references the AS that are associated with the Event S1.
   The arrow points to the HS-SCCH frame, where the UE is going to monitor the HS-SCCH with the selected H-RNTI.

### Example:

The UE receives an AI(ACK) in AS#1. If AS#1 lies in a 10ms-frame with SFN mod 4 = 2, then the H-RNTI used for HS-SCCH monitoring is associated with the PRACH signature sequence and with the Event S1.

Two UEs can receive AI(ACK) in consecutive AICH ASs, e.g., AS#2 and AS#3. In this case, both UEs switch to HS-SCCH reading during the HS-SCCH sub-frame #3 period. The two UEs may have used the same PRACH signature sequence. As AS#2 and AS#3 are associated with different events the UEs will use different H-RNTI values: One UE selects the H-RNTI associated with the Event S1, the other UE selects the H-RNTI associated with the Event S2. This guarantees that each UE uses a unique H-RNTI value when monitoring the HS-SCCH. The E-DCH resource information is exclusively for one UE.

### Proposal 3b:

Proposal 3a may have a drawback that theoretically up to 32 H-RNTI identifier and hence 32 HS-SCCH transmissions at one HS-SCCH sub-frame period are required, if in two consecutive AICH ASs 16 UEs receive an AI(ACK).

However, the proposal 3a has the advantage, that each UE receives one dedicated HS-SCCH transmission. After channel encoding, 120 bits can be conveyed per HS-SCCH transmission, which allows detailed E-DCH resource information allocated to an individual UE.

Preferably, if the number of bits required for E-DCH resource allocation is small, E-DCH resource information for several UEs may be transmitted with one scheduled HS-SCCH. This is exemplified within this proposal 3b.

For example, it is assumed that the HS-SCCH has the capacity to carry n times E-DCH resource information per Transmission Time Interval (TTI).

Each H-RNTI value used for enhanced random access is associated with a list of up to n combinations of PRACH signature sequences and events (sᵢ,Sᵢ).

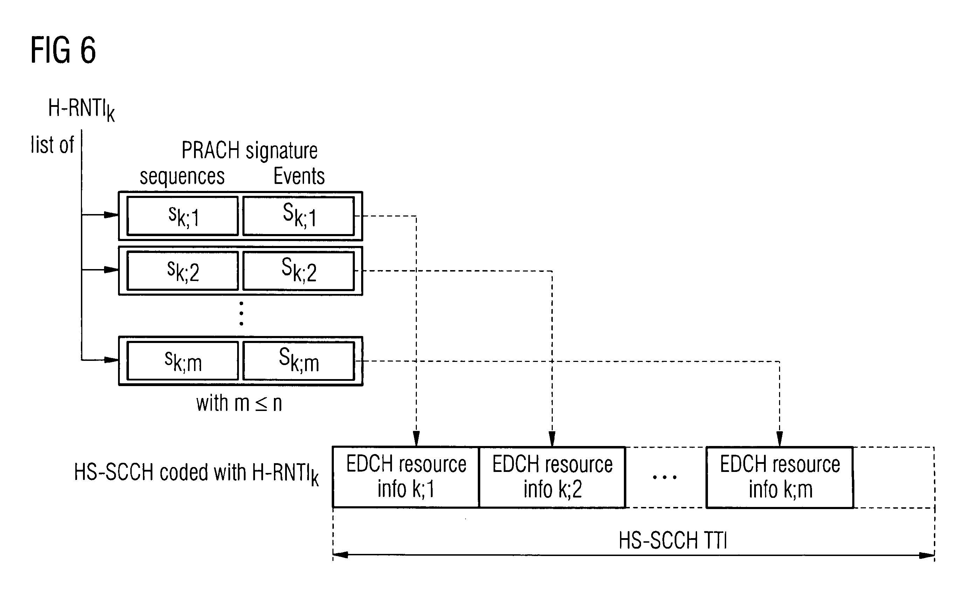

If a UE receives an AI(ACK) with the RACH signature sequence sᵢ in an AICH AS associated with the Event Si with the RACH signature sequence, then the UE selects the H-RNTI associated with (sᵢ,Sᵢ) and monitors the HS-SCCH with this H-RNTI at the start of the next HS-SCCH sub-frame for the duration of one HS-SCCH sub-frame period. The position of (sᵢ,Si₎ within the list of (PRACH signature sequences, events)-combinations acts as index where the UE is receiving its dedicated E-DCH resource information on the HS-SCCH (see **Fig.6**).

The (sᵢ,Sᵢ)-combination associated with an H-RNTI can be structured in several ways, for example:
- all (sᵢ,Sᵢ)-combinations may belong to a single event;
- for one PRACH signature sequence, the Event S1 and the Event S2 are listed on the HS-SCCH in sequence.

### Example:

In many implementations, 4 (out of 16) PRACH signature sequences are supported per cell for the random access due to processing capacity limitations on the DSPs.

According to this example, n = 8 different E-DCH resource allocations may be carried with one HS-SCCH during one TTI.

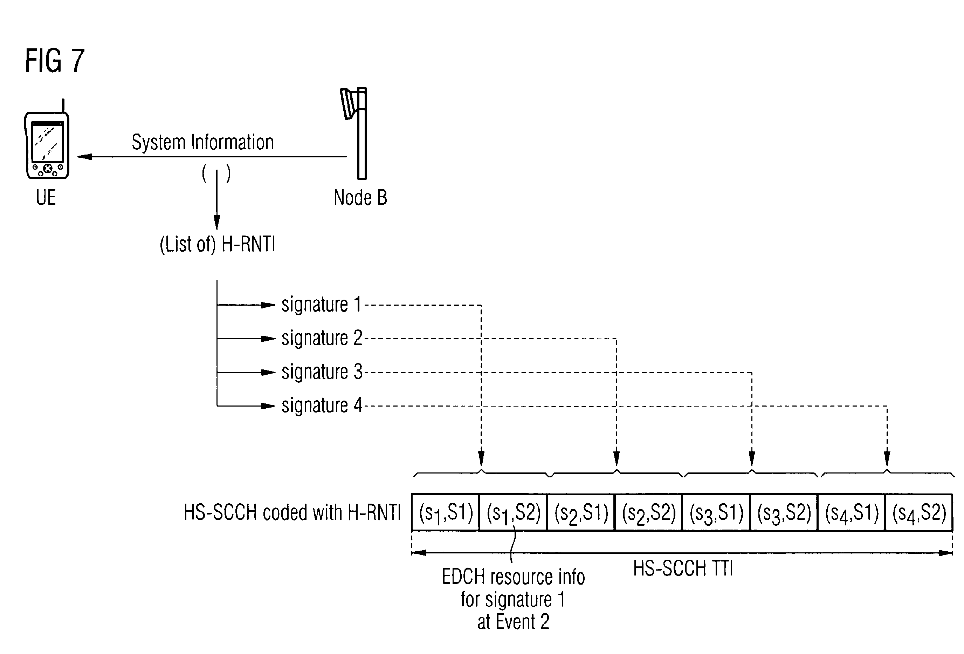

In this case, a single H-RNTI for enhanced random access resource allocation is required and HS-SCCH code blocking for enhanced RACH resource allocation is minimized (see **Fig.7**). It is to be noted that according to Fig.7 the position of the signature in the signature list associated with the H-RNTI automatically identifies the position for the E-DCH resource information on the HS-SCCH for the Event S1 as well as for the Event S2.

Hereinafter, further implementation details are referred to relating to the different proposals:

Proposal 1: HS-SCCH part I type solution to replace AICH

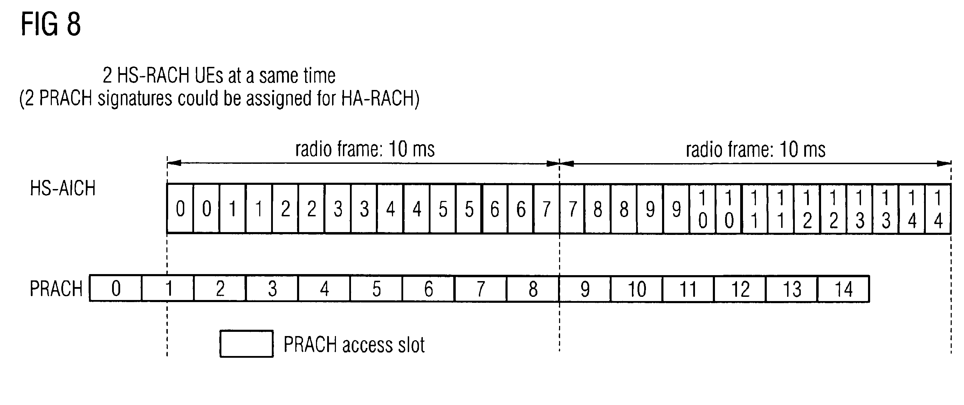

The content of HS-AICH (HS-SCCH part I type solution) shall provide information for resource assignment that is then masked with a 16 bit signature used by UE in PRACH. With this approach one UE may be served at a time. If multiple users having HS-RACH connection are to be supported in one RACH access slot, then HS-AICH shall be repeated in time for different UEs. **Fig.8** shows a diagram illustrating the case when two HS-RACH UEs are supported in the same PRACH access slot.

The procedure may in particular be as follows:
- UE wants to use E-DCH and selects HS-RACH signature sequence;
- UE sends PRACH preamble with the selected signature;
- If Node B detects PRACH with HS-RACH signature sequence and it decides to assign E-DCH transmission resources for the UE of this signature, Node B sends HS-AICH (HS-SCCH part I type) masked with the signature used by the UE with certain timing;
- If Node B detects PRACH with HS-RACH signature sequence and it decides not to assign E-DCH transmission resources for the UE of this signature, Node B sends nothing;
- UE listens to specified number of HS-AICH slots to detect HS-AICH with its signature masked;
- If UE detects HS-AICH, it can then decode the information data for resource assignment purposes;
- If UE does not detect HS-AICH even though it sent PRACH with HS-RACH signature it shall act as in normal RACH to send PRACH preamble again.

### Proposal 2: AICH extended with HS-SCCH part I type solution

The procedure may in particular be as follows:
- UE wants to use E-DCH and selects HS-RACH signature sequence;
- UE sends PRACH preamble with the selected signature;
- If Node B detects PRACH with HS-RACH signature sequence and if Node B decides to assign E-DCH resources for the UE of this signature it sends ACK on AICH and HS-AICH (HS-SCCH part I type) masked with the signature used by the UE with certain timing during associated HS-AICH slots;
- If Node B detects PRACH with HS-RACH signature sequence and if Node B decides not to assign E-DCH resources for the UE of this signature it sends NACK on AICH;
- If UE detects ACK on AICH with its signature it starts listening to associated HS-AICH slots for detecting the HS-AICH masked with its signature;
- If UE detects HS-AICH, it decodes the information data for resource assignment purposes;
- If UE doesn't detect HS-AICH even though it received ACK on AICH it shall act as in normal RACH to send PRACH preamble again.

### Proposal 3:

The content of the HS-SCCH shall provide information for resource assignment that is then masked with H-RNTI associated with the 16 bit signature used by UE in PRACH and the AICH AS event type (S1, S2), where the UE has received the AI (ACK) .

In proposal 3a only one UE can be served per H-RNTI, but multiple UEs can be served simultaneous with different H-RNTI identifier.

In proposal 3b, a list of (sᵢ,Sᵢ)-combinations is associated with a single H-RNTI. The relative position of an (sᵢ,Sᵢ)-combination in the list acts as index where the information for resource assignment on the HS-SCCH is located.

The procedure may in particular be as follows:
- UE wants to use E-DCH and selects HS-RACH signature sequence sᵢ;
- UE sends PRACH preamble with the selected signature sᵢ;
- Node B detects PRACH with HS-RACH signature sequence sᵢ and returns an AI (ACK) ;
- UE receives the AI;
- If UE receives AI(ACK) with its selected HS-RACH signature sequence sᵢ in an AICH AS associated with an Event Sᵢ, then the UE selects the H-RNTI associated with (sᵢ,Sᵢ) and monitors the HS-SCCH with this H-RNTI at the start of the next HS-SCCH sub-frame for the duration of one HS-SCCH sub-frame period;
- If Node B decides to assign E-DCH resources for the UE of this signature sᵢ and if it has returned an AI(ACK) on AS#j (at the Event Si), then it determines the H-RNTI based on the signature sᵢ and on the Event Si and masks the resource allocation on HS-SCCH with this H-RNTI. In proposal 3b, the signature-event combination determines where the information for resource assignment is placed on the HS-SCCH.
- If UE detects the HS-SCCH, it decodes the information data for resource assignment purposes. If UE does not detect HS-SCCH even though it received ACK on AICH it shall act as in normal RACH.

### Further Advantages:

Proposals 1, 2 and 3:
- Each of the proposals provides means for transmitting coded information (e.g., possibility to make use of CRC) in short time;
- Fast and efficient way to signal resource parameters for UE to start immediate E-DCH transmission.

### Proposals 1 and 2:

- Implementation does not require huge changes of existing system. HS-AICH detection by UE is similar to HS-SCCH detection and the network may reuse HS-SCCH implementation for HS-AICH.

### Proposal 3:

- No impact on Layer 1;
- higher E-DCH resource allocation capacity (in comparison to proposals 1 or 2).

### Abbreviations:

- ACK: Acknowledgement (Message)
- AI: Acquisition Indicator
- AICH: Acquisition Indicator Channel
- AS: Access Slot
- CRC: Cyclic Redundancy Check
- E-DCH: Enhanced Uplink Dedicated Channel
- HARQ: Hybrid Automatic Repeat Request
- H-RNTI: HS-DSCH Radio Network Transaction Identifier
- HS-AICH: High Speed AICH
- HSDPA: High Speed Downlink Packet Access
- HS-DSCH: High Speed Downlink Shared Channel
- HS-RACH: High Speed Random Access Channel
- HS-SCCH: High Speed Shared Control Channel
- NACK: Negative Acknowledgement (Message)
- PRACH: Physical Random Access Channel
- RACH: Random Access Channel
- SF: Spreading Factor
- TTI: Transmission Time Interval
- UE: User Equipment

### References:

- [1]: 3GPP TS25.214, V7.5.0 (2007-05), Physical Layer Procedures (FDD)
- [2]: H. Holma, A. Toskala: WCDMA for UMTS, Third Edition, John Wiley & Sons, Ltd, 2004, Chapter 11.5.2.

## Claims

1. A method for data processing comprising the following step:
- Subsequent to a random access procedure, a shared control channel is utilized to assign resources to a user equipment for initiating a transmission via an enhanced dedicated channel.

2. The method according to claim 1, wherein an HS-AICH is determined to signal enhanced dedicated channel transmission parameters for two User Equipments in one access slot of the HS-AICH.

3. The method according to claim 2, wherein the HS-AICH provides resources to a user equipment for initiating a transmission via the enhanced dedicated channel in case of a confirmation message (ACK) has been provided by an AICH.

4. The method according to one of claims 2 or 3, wherein the HS-AICH comprises a timing offset in relation to an AICH access slot timing.

5. The method according to claim 1, wherein a reception of an acquisition indicator on an AICH access slot is associated with at least one event.

6. The method according to claim 5, wherein two sets of H-RNTIs are associated with a RACH signature sequence.

7. The method according to claim 6, wherein an H-RNTI is associated with the at least one event.

8. The method according to any of the previous claims,
wherein the shared control channel is capable of carrying resources for more than one enhanced dedicated channel.

9. The method according to any of the previous claims,
wherein the shared control channel is an HS-SCCH.

10. A device for data processing comprising a processor unit that is arranged such that the method according of any of the preceding claims is executable on said processor unit.

11. The device according to claim 10, wherein said device is a communication device, in particular a network element.

12. The device according to any of claims 10 or 11, wherein said device is a Node B or a User Equipment.

13. Communication system comprising the device according to any of claims 10 to 12.
